# FASCICULE DE BREVET EUROPEEN

(11) **EP 1 512 672 B1**
(45) Date de publication et mention de la délivrance du brevet: **19.11.2014**
(21) Numéro de dépôt: 04291860.7
(22) Date de dépôt: 21.07.2004
(51) Int. Cl.: C03C 13/04

(54) **Fibre optique active pour amplification Raman**
Optische Faser zur Raman-Verstärkung
Optical fiber for Raman amplification

(30) Priorité: 29.07.2003 FR 0309287
(43) Date de publication de la demande: 09.03.2005
(73) Titulaire: ALCATEL LUCENT, 92100 Boulogne-Billancourt (FR)
(72) Inventeur: Bourova, Ekaterina, 92100 Boulogne-Billancourt (FR); Blanchandin, Stéphanie, 75015 Paris (FR); Leplingard, Florence, 78350 Jouy-en-Josas (FR)
(74) Mandataire: Sciaux, Edmond

(56) Documents cités:
- EP-A- 0 139 081
- EP-A- 0 146 262
- EP-A- 0 248 517
- US-A- 4 820 018
- US-B1- 6 410 467
- NAKASHIMA T ET AL: "Dependence of raman gain on relative index differences for GeO2-doped single-mode fibers" OPTICS LETTERS, vol. 10, no. 8, août 1985 (1985-08), pages 420-422, XP002260242

## Description

La présente invention concerne le domaine des fibres optiques et plus particulièrement les fibres optiques actives pour amplification Raman. Une telle fibre optimisée peut être destinée à générer une source laser à multi longueurs d'onde accordable par émission Raman stimulée dans la fibre.

L'effet Raman peut être défini (I. et M. Joindot : "Les télécommunications par fibres optiques", Dunod, 1996) comme un couplage photon-phonon entre le champ électromagnétique et les vibrations mécaniques du milieu. L'effet Raman correspond à un couplage avec les phonons optiques. Les phonons optiques correspondent à des vibrations internes aux édifices moléculaires dont le matériau est constitué. C'est un effet non linaire dans lequel un photon de pompe est absorbé et un photon signal de plus faible énergie est émis en même temps qu'un phonon du matériau.

Chaque matériau présente un spectre d'émission Roman spontanée à des longueurs d'onde données, c'est-à-dire se comporte comme un ensemble d'oscillateurs de vibration à une fréquence donnée. Un spectre d'émission caractéristique du matériau peut donc être établie, avec des pics d'intensité à des longueurs d'onde données nommées raies de Stokes. Le spectre Raman d'un verre, comme d'un matériau amorphe désordonnée, est caractérisé par un grand nombre de longueurs d'onde formant un spectre continu sur une large bande de fréquences.

L'intensité de l'émission Raman augmente avec la puissance d'entrée appliquée au matériau et devient significative à une puissance donnée nommée le seuil. Donc, en stimulant le matériau par une forte puissance optique, par un laser de pompe par exemple, le pic d'intensité correspondant à l'émission Raman spontanée peut atteindre 100% de l'intensité du signal de pompe à une longueur d'onde donnée. Il est ainsi possible, en exploitant l'émission Raman d'un matériau, d'amplifier fortement un signal optique en le faisant traverser ledit matériau stimulé par un signal optique de pompe. Un signal optique est en outre amplifié s'il a une longueur d'onde optique décalée par rapport à celle de la pompe d'une valeur donnée, c'est-à-dire la longueur d'onde du pic d'émission Raman dépend de la longueur d'onde du signal de pompe. On définit ainsi un décalage de Stokes (appelée «Stokes shift » en terminologie anglaise), représentatif de l'écart entre la fréquence optique de la pompe et une fréquence optique considéré.

En réintroduisant un signal optique amplifié plusieurs fois dans le milieu amplificateur Raman, il est possible d'amplifier et de décaler successivement ce signal optique pour atteindre des caractéristiques optiques de puissance et de longueur d'onde requises.

En outre, un laser Raman peut être généré en associant le milieu amplificateur Raman à des cavités de Fabry-Pérot adéquates.

Les amplificateurs ou lasers Raman présentent donc un grand intérêt pour des applications dans des systèmes de transmission optique.

En général, on utilise des modules combinant plusieurs pompes (constituées de diodes à semi-conducteurs) pour pomper des amplificateurs Raman. Les modules multi-pompes sont cependant chers et consomment beaucoup d'énergie. Par ailleurs, les modules multi-pompes fonctionnent avec une pluralité de diodes multiplexées en polarisation. La défaillance d'une diode provoque alors la dépolarisation de la source. Il existe donc un intérêt pour remplacer les modules multi-pompes par un laser Raman accordable à multilongueurs d'onde.

La plupart des amplificateurs ou lasers Raman utilisent des fibres à base de silice, de germano-silicate ou de phospho-silicate. Les spectres Raman de la silice et du germano-silicate présentent une unique bande d'émission Raman dont la largeur permet d'obtenir les décalages ne dépassant pas 100 nm lorsque le matériau est soumis à un signal de pompe à 1.5 µm. Les fibres à base de phospho-silicate présentent un spectre d'émission Raman avec un double pic fournissant un premier décalage qui ne dépasse pas 100 nm correspondant au décalage fourni par la silice et un décalage supplémentaire à 300 nm lorsque le matériau est soumis à un signal de pompe à 1.4µm.

En outre, une sélection, en sortie d'une telle fibre Raman par des réseaux de Bragg par exemple, permet de réaliser un laser Raman accordable. Une telle application est en particulier décrite dans « Six output wavelength Raman fiber laser for Raman amplification », de F. Leplingard et al., Electronics Letters, 1 août 2002, vol. 38, No. 16, pp 886-887.

Les fibres d'amplification Raman à base de silice ou de germano-silicate présentent cependant l'inconvénient d'une largeur de pic d'amplification réduite et la nécessité de disposer de beaucoup de réseaux de Bragg pour obtenir un laser accordable en longueur d'onde. Par ailleurs, les fibres d'amplification Raman à base de phospho-silicate ont l'avantage de présenter deux pics d'amplification distants, qui permettent de réduire le nombre de réseaux de Bragg, mais le gain d'amplification est plus faible que celui des fibres Raman à base de silice ou germano-silicate et le second pic d'amplification est très étroit.

En outre, lorsque l'on cherche à modéliser un laser multi longueurs d'onde à partir d'une fibre d'amplification Raman, les interactions entre les pics sont importantes et conduisent à des différences de gain qui rend les différentes longueurs d'onde émises par le laser Raman interdépendantes, ce qui complique la conception du laser.

Un objet de la présente invention est de proposer une nouvelle composition qui permette de réaliser une fibre optique active pour amplification Raman améliorée présentant une pluralité de pics d'amplification indépendants, chaque pic ayant un fort gain d'amplification et une grande largeur de bande à mi-hauteur.

A cet effet, l'invention propose une fibre optique active d'amplification Raman comprenant un coeur contenant
- de l'oxyde de silice (SiO₂) et
- de l'oxyde de germanium (GeO₂),
caractérisée en ce que ladite fibre contient en outre
- de l'oxyde de lithium (Li₂O) et
- de l'oxyde de baryum (BaO),
ladite fibre comprenant un milieu amplificateur contenu dans ledit coeur comprenant 30 à 90% en mole de SiO₂ et moins de 50% en mole de l'ensemble Li₂O, GeO₂ et BaO.

Selon une caractéristique, le coeur comprend en outre moins de 40% en mole d'un dopant.

Selon les modes de réalisation, le dopant est un composé alcalino-terreux ou un composé alcalin.

Selon une caractéristique, le coeur comprend en outre un composé de sulfure.

Selon une caractéristique, le coeur comprend en outre au moins un oxyde choisi parmi le groupe comprenant P₂O₅, B₂O₃, Al₂O₃, Ta₂O₅, V₂O₅, As₂O₃, TiO₂, ZrO₂, PbO, Bi₂O₃, Mo₂O₃, WO₃, SnO₂, Sb₂O₃, Ga₂O₃, In₂O₃, TeO₂.

L'invention concerne également un laser Raman multi longueurs d'onde comprenant une fibre optique selon l'invention.

Selon une caractéristique, le laser comprend au moins un réseau de Bragg.

Selon une caractéristique, le réseau de Bragg est accordable.

Les particularités et avantages de l'invention apparaîtront plus clairement à la lecture de la description qui suit, donnée à titre d'exemple illustratif et non limitatif, et faite en référence aux figures annexées qui représentent :
- la figure 1, un graphe illustrant les spectres d'émission Raman spontanée de la fibre amplificatrice selon l'invention (courbe A), d'une fibre silice standard (courbe B) et d'une fibre phospho-silicate (courbe C) ;
- la figure 2, un laser Raman comprenant une fibre amplificatrice selon l'invention.

L'invention concerne une composition de fibre optique présentant une activité Raman améliorée. Le milieu amplificateur de cette fibre, contenu dans le coeur de la fibre, comprend de l'oxyde de silice (SiO₂) dans une concentration de 30 à 90% en mole, et un mélange d'oxyde de lithium (Li₂O), d'oxyde de germanium (GeO₂) et d'oxyde de baryum (BaO) dans une concentration inférieure à 50% en mole.

Le dopage de la silice avec du lithium, du germanium et du baryum permet de créer trois pics d'amplification par émission Raman du matériau. Ces pics sont indépendants et de gain optique équivalent.

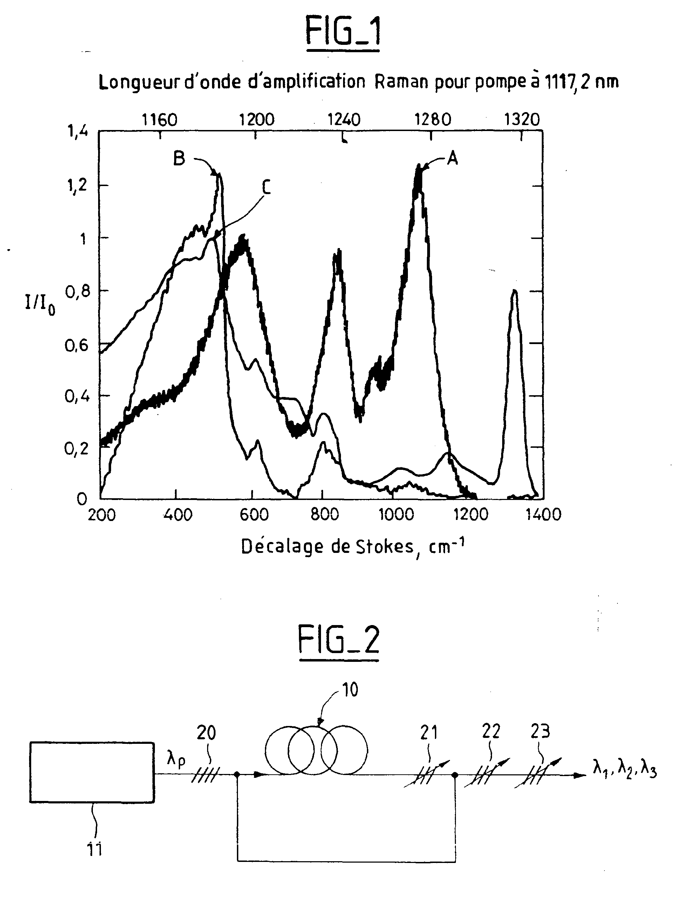

La figure 1 illustre le spectre d'émission Raman d'une fibre ayant la composition selon l'invention (courbe A) comparé avec les spectres d'émission Raman d'une fibre silice standard (courbe B) et d'une fibre phospho-silicate (courbe C).

Chaque courbe représente en ordonnées l'intensité d'émission I/10 normalisée par rapport à son premier pic d'amplification 10 en fonction d'une part des longueurs d'onde d'amplification Raman, exprimées en nanomètres, obtenue avec une pompe à 1117,2 nm et reportées en abscisses supérieures, et d'autre part en fonction des décalages de Stokes, exprimés en cm⁻¹, reportés en abscisses inférieures. On a défini ici le décalage de Strokes comme la valeur absolue de la différence de l'inverse des longueurs d'onde de la pompe et du signal considéré, soit |1/λₚ - 1/ λₛ|, où λₚ et λs sont exprimés en cm.

Les trois pics d'émission Raman de la fibre amplificatrice selon l'invention, situés à 557 cm⁻¹, 835 cm⁻¹ et 1063cm⁻¹, sont indépendants les uns des autres et correspondent à des décalages de longueurs d'onde du signal amplifié respectivement de 78 nm, 121 nm et 158 nm lorsque le matériau est soumis à un signal de pompe à 1,117µm.

Les largeurs de bande d'amplification à mi-hauteur de chaque pic d'émission Raman de la fibre selon l'invention, respectivement de 217 cm⁻¹, 98 cm⁻¹ et 103 cm⁻¹, sont du même ordre de grandeur que celle du pic d'amplification d'une fibre silice (203 cm⁻¹) et trois fois plus large que celle du second pic d'une fibre phospho-silicate (34 cm⁻¹). En outre, la présence de germanium dans la composition garantit un gain Raman effectif plus important que celui d'une fibre phospho-silicate.

La composition du milieu amplificateur de la fibre Raman selon l'invention peut en outre contenir un dopant tel qu'un composé alcalino-terreux, par exemple MgO, CaO, ou un composé alcalin, par exemple Na₂O, K₂O, dans une concentration inférieure à 40 % en mole. L'ajout de ce dopant dans la concentration permet de favoriser la synthèse du matériau à l'état vireux ou/et de jouer sur les caractéristiques optiques.

La composition du milieu amplificateur de la fibre Raman selon l'invention peut également être améliorée par l'ajout d'un composé de sulfure ou d'un ou plusieurs oxydes du groupe comprenant P₂O₅, B₂O₃, Al₂O₃, Ta₂O₅, V₂O₅, As₂O₃, TiO₂, ZrO₂, PbO, Bi₂O₃, Mo₂O₃, WO₃, SnO₂, Sb₂O₃, Ga₂O₃, In₂O₃, TeO₂. Un tel ajout permet d'améliorer la stabilité de la composition et renforce les propriétés d'amplification Raman précitées.

Une telle fibre peut être fabriquée par une technique classique de dépôt chimique en phase vapeur (MCVD pour Modified Chemical Vapor Deposition en anglais) ou par une technique d'étirage sur une préforme avec double creuset.

La fibre amplificatrice selon l'invention trouve une application intéressante pour constituer un laser multi longueurs d'onde. Les lasers à fibres Raman trouvent une application particulière comme source de pompe pour amplificateurs optiques. En effet, un laser à fibre Raman peut délivrer une forte puissance sur une large bande de longueur d'onde.

La figure 2 illustre schématiquement un laser Raman selon l'invention.

Un tel laser comprend une portion de fibre amplificatrice Raman 10 à laquelle est couplée une source de pompe 11 destinée à stimuler le milieu amplificateur Raman. Selon la longueur d'onde le la source de pompe λₚ et la composition du matériau constituant le milieu amplificateur de la fibre Raman 10, le laser émet un signal optique à un longueur d'onde donnée.

La portion de fibre 10 est disposée entre deux éléments miroirs faisant office de facettes de la cavité laser. Un premier miroir 20 fortement réfléchissant aux longueurs d'onde considérées, tel qu'un réseau de Bragg droit par exemple, est disposé entre la pompe 11 et la fibre amplificatrice 10. Ce miroir 20 transmet le signal de pompe λₚ vers la fibre 10 mais réfléchit toute contre propagation de signaux lumineux de la fibre 10 vers la source de pompe 11. Au moins un second miroir 21 est disposé en sortie de fibre 10. Ce miroir est faiblement réfléchissant, tel qu'un réseau de Bragg en angle par exemple, est constitue la facette de sortie du laser selon l'invention.

Selon l'invention, la composition de la fibre amplificatrice Raman 10 permet l'émission de trois signaux sur trois longueurs d'onde données distinctes λ₁, λ₂, λ₃.

Un filtre, tel qu'un réseau de Bragg 21 par exemple, en sortie de fibre 10 peut sélectionner l'une ou l'autre des longueurs d'onde pour une réinjection dans la fibre amplificatrice afin de produire un signal réamplifié et redécalé. Le réseau de Bragg 21 peut être accordable, par contrainte mécanique avec un élément piezzo électrique par exemple, ou par contrainte thermique pour ajuster la longueur d'onde sélectionnée.

Ce filtre peut être remplacé par un multiplexeur optique qui répartit le signal optique d'une ou plusieurs des longueurs d'onde λ₁, λ₂, λ₃ émises par la fibre 10 entre une sortie du laser et/ou une réinjection dans le milieu amplificateur de la fibre.

Selon l'invention, un laser multi longueurs d'onde peut être produit avec un nombre limité de réseaux de Bragg.

Par exemple, à partir d'une source de pompe 11 à λₚ=1117,2 nm, on souhaite émettre trois signaux sur trois longueurs d'onde dans la bande S. Dans le cas d'une composition germano-silicate classique, cinq décalages successifs de 430 cm⁻¹ seraient nécessaires avant d'ajuster les trois longueurs d'onde d'émission à 1427 nm, 1455 nm et 1480 nm avec trois réseaux de Bragg différents qui forment trois cavités externes du laser.

Dans le cas de la composition selon l'invention, le signal de pompe provoque l'émission de trois signaux décalés correspondant aux trois pics d'émission Raman de la composition. On sélectionne un des signaux, par exemple le signal le plus fortement décalé de 1063 cm⁻¹ avec un réseau de Bragg 21. Ce signal sélectionné et ajusté à 1267 nm est alors réintroduit dans le milieu amplificateur de la fibre 10 où il est à nouveau amplifié et répartis sur trois émissions décalées respectivement de 557 cm⁻¹, 835 cm⁻¹ et 1063 cm⁻¹. Ces trois signaux de longueurs d'onde respectives λ₁=1364 nm, λ₂=1417 nm et λ₃=1465 nm sont alors émis par le laser Raman selon l'invention. Eventuellement, des réseaux de Bragg 21, 22, 23 peuvent être disposés à la sortie du laser selon l'invention pour ajuster les longueurs d'onde émises.

Cependant, contrairement au laser Raman à base de germano-silicate mentionné précédemment, aucun réseau de Bragg supplémentaire n'est nécessaire pour répartir un signal de sortie unique en trois signaux de longueurs d'onde distinctes.

En outre, lorsque une seule longueur d'onde est réinjectée dans le milieu amplificateur, comme décrit en référence à l'exemple numérique ci-dessus, le gain optique des longueurs d'onde λ₁,λ₂,λ₃ finalement émises par le laser est sensiblement identique.

Il est entendu que de multiples autres possibilités de sélection de l'une ou l'autre des émissions amplifiées par la composition Raman selon l'invention peuvent être envisagée. En particulier, chacune ou plusieurs des longueurs d'onde λ₁, λ₂, λ₃ émises par la fibre amplificatrice 10 peuvent être réintroduites dans le milieu amplificateur, par exemple au moyen d'une pluralité de réseaux de Bragg à réflexion totale pour chaque longueur d'onde respective λ₁, λ₂, λ₃ et générer ainsi trois signaux optiques redécalés en longueur d'onde ; mais cela dans les limites des interactions optiques indésirables.

Selon l'invention, un laser multi longueurs peut être réaliser présentant une grande flexibilité dans le choix de la longueur d'onde d'émission et une bonne accordabilité par l'ajout d'un nombre limité de réseaux de Bragg.

## Revendications

1. Fibre optique active d'amplification Raman comprenant un milieu amplificateur contenant l'oxyde de silice (SiO2),
**caractérisée en ce que** l'oxyde de silice (SiO₂) est dans une concentration de 30 à 90% en mole dudit milieu amplificateur et **en ce que** le milieu amplificateur de ladite fibre contient en outre un mélange d'oxyde de germanium (GeO₂), d'oxyde de lithium (Li₂O), et d'oxyde de baryum (BaO) représentant moins de 50% en mole dudit milieu amplificateur, la présence de germanium lithium et baryum permettant l'émission de trois pics d'amplification indépendants.

2. Fibre optique selon la revendication 1, dans laquelle le milieu amplificateur comprend en outre moins de 40% en mole d'un dopant.

3. Fibre optique selon la revendication 2, dans laquelle le dopant est un composé alcalino-terreux.

4. Fibre optique selon la revendication 2, dans laquelle le dopant est un composé alcalin.

5. Fibre optique selon l'une des revendications 1 à 4, dans laquelle le coeur comprend en outre un composé de sulfure.

6. Fibre optique selon l'une des revendications 1 à 5, dans laquelle le coeur comprend en outre au moins un oxyde choisi parmi le groupe comprenant P₂O₅, B₂O₃, Al₂O₃, Ta₂O₅, V₂O₅, As₂O₃, TiO₂, ZrO₂, PbO, Bi₂O₃, Mo₂O₃, WO₃, SnO₂, Sb₂O₃, Ga₂O₃, In₂O₃, TeO₂.

7. Laser Raman multi longueurs d'onde comprenant une fibre optique selon l'une des revendications précédentes.

8. Laser Raman selon la revendication 7, comprenant au moins un réseau de Bragg.

9. Laser Raman selon la revendication 8, dans lequel le réseau de Bragg est accordable.

## Patentansprüche

1. Aktive optische Raman-Verstärkungsfaser mit einem Verstärkungsmedium, welches Siliziumoxid (Si02) enthält,
**dadurch gekennzeichnet, dass** das Siliziumoxid (Si02) in einer Konzentration von 30 bis 90 Mol-% des besagten Verstärkungsmediums vorhanden ist, und dass das Verstärkungsmedium der besagten optischen Faser weiterhin eine Mischung von Germaniumoxid (GeO₂), Lithiumoxid (Li₂O) und Bariumoxid (BaO) enthält, welche weniger als 50 Mol-% des besagten Verstärkungsmediums darstellt, wobei die Anwesenheit von Germanium, Lithium und Barium die Ausgabe von drei unabhängigen Verstärkungsspitzen ermöglicht.

2. Optische Faser nach Anspruch 1, wobei das Verstärkungsmedium weiterhin mindestens 40 Mol-% eines Dotierstoffes umfasst.

3. Optische Faser nach Anspruch 2, wobei der Dotierstoff eine Erdalkali-Verbindung ist.

4. Optische Faser nach Anspruch 2, wobei der Dotierstoff eine alkalische Verbindung ist.

5. Optische Faser nach einem der Ansprüche 1 bis 4, wobei der Kern weiterhin eine Schwefelverbindung umfasst.

6. Optische Faser nach einem der Ansprüche 1 bis 5, wobei der Kern weiterhin mindestens ein Oxid, gewählt in der Gruppe bestehend aus P₂O₅, B₂O₃, AbO₃, Ta₂O₅, V₂O₅, As₂O₃, TiO₂, ZrO₂, PbO, Bi₂O₃, Mo₂O₃, WO₃, SnO₂, Sb₂O₃, Ga₂O₃, In₂O₃ und TeO₂, umfasst.

7. Raman-Laser mit mehreren Wellenlängen, welcher eine optische Faser gemäß einem der vorstehenden Ansprüche umfasst.

8. Raman-Laser nach Anspruch 7, welcher mindestens ein Bragg-Gitter umfasst.

9. Raman-Laser nach Anspruch 8, wobei das Bragg-Gitter abstimmbar ist.

## Claims

1. A Raman-active amplification optical fiber comprising an amplifying medium containing silicon oxide (SiO₂),
**characterized in that** the silicon dioxide (SiO₂) is in a concentration of between 30% and 90% molar of said amplifying medium and **in that** the amplifying medium of said fiber further contains a mixture of germanium oxide (GeO₂), lithium oxide (Li₂O), and barium oxide (BaO) representing less than 50% molar of said amplifying medium, the presence of germanium, lithium, and barium enabling the emission of three independent amplification peaks.

2. An optical fiber according to claim 1, wherein the amplifying medium further comprises less than 40% molar of a dopant.

3. An optical fiber according to claim 2, wherein the dopant is an alkaline earth compound.

4. An optical fiber according to claim 2, wherein the dopant is an alkaline compound.

5. An optical fiber according to one of the claims 1 to 4, wherein the core further comprises a sulfide compound.

6. An optical fiber according to one of the claims 1 to 5, wherein the core further comprises at least one oxide selected from the group consisting of P₂O₅, B₂O₃, Al₂O₃, Ta₂O₅, V₂O₅, As₂O₃, TiO₂, ZrO₂, PbO, Bi₂O₃, Mo₂O₃, WO₃, SnO₂, Sb₂O₃, Ga₂O₃, In₂O₃, and Te02.

7. A multi-wavelength Raman laser comprising an optical fiber according to one of the preceding claims.

8. A Raman laser according to claim 7, comprising at least one Bragg grating.

9. A Raman laser according to claim 8, wherein the Bragg grating is tunable.
